# EUROPÄISCHE PATENTSCHRIFT

(11) **EP 4 470 796 B1**
(45) Veröffentlichungstag und Bekanntmachung des Hinweises auf die Patenterteilung: **02.12.2026**
(21) Anmeldenummer: 24173702.2
(22) Anmeldetag: 02.05.2024
(51) Int. Cl.: B60C 11/03

(54) **FAHRRADREIFEN**
BICYCLE TYRE
PNEU DE BICYCLETTE

(30) Priorität: 01.06.2023 DE 102023205137
(43) Veröffentlichungstag der Anmeldung: 04.12.2024
(73) Patentinhaber: Continental Reifen Deutschland GmbH, 30175 Hannover (DE)
(72) Erfinder: Sudikatis, Florian, 30175 Hannover (DE)
(74) Vertreter: Continental Corporation

(56) Entgegenhaltungen:
- EP-A1- 2 311 660
- EP-B1- 2 915 685
- CA-A1- 3 105 061
- DE-U1- 9 404 916
- JP-A- H03 239 606

## Beschreibung

Die Erfindung betrifft einen Fahrradreifen mit einem Laufstreifen mit einem laufrichtungsgebundenem Stollenprofil aus voneinander beabstandeten Stollen, wobei die Laufstreifenbereiche zwischen den Stollen unstrukturiert sind und eine Laufstreifenbasisfläche bilden, wobei zu den Stollen Schulterstollen und mittige Stollen gehören, wobei die mittigen Stollen jeweils eine parallel oder im Wesentlichen parallel zur Laufstreifenbasisfläche verlaufende Deckfläche aufweisen.

Fahrradreifen, die für die Fahrradkategorie GRAVEL oder MTB (Mountainbike) vorgesehen und geeignet sind, weisen üblicherweise ein Stollenprofil auf, sodass diese Fahrradreifen die für den off-road Einsatz auf unterschiedlichen, unbefestigten, losen oder rutschigen Untergründen, wie Forstwege oder Waldwege, die benötigten Griffeigenschaften besitzen. Für derartige Fahrradreifen ist eine große Anzahl unterschiedlich gestalteter Stollenprofile bekannt. Einige solcher Stollenprofile weisen Fahrradreifen, die auf der Webseite der Firma Continental abgebildet sind, auf, siehe beispielsweise https://www.continental-reifen.de/b2c/bicycle/search-results.html?searchMode=sbs&pogSegment2MappingDTacs=Gravel (abgerufen am 28.04.2023).

Die DE 295 09 996 U1 zeigt in Fig. 1 einen Fahrradreifen mit einem Laufstreifen mit einem Stollenprofil mit Schulterstollen und mittigen Stollen, welche jeweils eine polyederförmige Gestalt aufweisen.

Ein Fahrradreifen der eingangs genannten Art, welcher ein Fahrradreifen für ein Mountainbike ist, ist beispielsweise aus der DE 94 04 916 U1 bekannt. Dieser Fahrradreifen weist einen Laufstreifen mit einem laufrichtungsgebundenem Stollenprofil aus voneinander beabstandeten Stollen, zu welchen mittige Stollen und Schulterstollen gehören, auf. Die Laufstreifenbereiche zwischen den Stollen bilden eine unstrukturierte Laufstreifenbasisfläche. Die mittigen Stollen weisen jeweils eine parallel zur Laufstreifenbasisfläche verlaufende Deckfläche, eine an diese anschließende, in Richtung des Abrollens des Fahrradreifens bei Vorwärtsfahrt abfallende Stirnfläche und eine dieser gegenüberliegende, bezüglich der Abrollrichtung bei Vorwärtsfahrt rückwärtig an die Deckfläche anschließende, konkav in den mittigen Stollen hineingewölbte Rückseite auf. Die Schulterstollen sind mit einer in Draufsicht mittig im Schulterstollen ausgebildeten Ausnehmung versehen. Ein Fahrradreifen mit einem solchen Stollenprofil soll bedingt durch die mittigen Stollen einen geringen Rollwiderstand auf trocknem festem Untergrund aufweisen, wobei auf weichem oder nassem Untergrund gute Traktionseigenschaften gegeben sein sollen.

Die EP 2 311 660 A1 offenbart einen Reifen für Fahrzeuge mit zwei Rädern, beispielsweise für ein geländetaugliches Motorrad. Der Reifen weist einen laufrichtungsgebunden ausgeführten Laufstreifen mit einem Stollenprofil mit mittigen Stollen, zu welchen zentrale Stollen und halbmittige Stollen gehören, und Schulterstollen auf. Die zentralen Stollen sind entlang der Reifenäquatorialebene jeweils von einer gerade verlaufenden Rille durchquert. Ferner sind die zentralen Stollen und die halbmittigen Stollen, im in Umfangsrichtung ausgerichteten Querschnitt betrachtet, am einlaufenden Kantenbereich mit einer Schrägfläche und am auslaufenden Kantenbereich mit einem keilförmigen Vorsprung versehen, welcher niveaugleich mit der Deckfläche der Stollen abschließt. Ein solcher Reifen soll eine gute Performance im Gelände und ein gutes Ansprechverhalten auf Straßenbelag aufweisen.

Aus der CA 3 105 061 A ist ein Reifen für den Ganzjahreseinsatz mit einem Laufstreifen mit einer Rillen und/oder Einschnitte umfassenden Profilierung bekannt, wobei die Rillen und/oder Einschnitte Profilblöcke begrenzen. Die Profilblöcke sind im Bereich der Blockkanten mit auf ihren Außenflächen aufsitzenden Erhebungen versehen, welche beispielsweise balkenförmig ausgebildet und zur nächstliegenden Rille mit einer eine Schrägfläche bildenden Fase versehen sind, sodass die Erhebungen eine keilartige Gestalt aufweisen. Der Reifen soll unter Aufrechterhaltung einer guten Nässeperformance eine verbesserte Schneeperformance aufweisen.

Die EP 2 915 685 B1 offenbart einen Fahrradreifen mit einem Laufstreifen, welcher mit kleinen keilförmigen Erhebungen vollständig bedeckt und daher aus solchen gebildet ist. Die Erhebungen weisen die Form von in axialer Richtung oder in Umfangsrichtung langgezogenen, liegend angeordneten, gleichseitig dreieckigen Prismen mit abgeschrägten Längsenden auf. Gemäß einem Ausführungsbeispiel sind die Erhebungen in nebeneinander verlaufenden ersten und zweiten Reihen angeordnet, wobei die Erhebungen in den ersten Reihen an ihren Längsenden aneinander angrenzen und die Erhebungen in den zweiten Reihen, in Draufsicht betrachtet, um 90° verdreht zu den Erhebungen der ersten Reihen orientiert sind. Gemäß einem weiteren Ausführungsbeispiel sind die Erhebungen derart paarweise angeordnet und zueinander um 90° verdreht orientiert, dass diese dem Laufstreifen, in Draufsicht betrachtet, ein schachbrettartiges Muster verleihen. Ein solcher Fahrradreifen soll ein gutes Traktionsverhalten aufweisen.

Die JP H03 239 606 A offenbart einen Reifen, beispielsweise einen Fahrzeugluftreifen für ein Kraftfahrzeug, mit einem Laufstreifen mit schulterseitigen Profilblöcken, ersten mittigen Profilblöcken und zweiten mittigen Profilblöcken. Die ersten mittigen Profilblöcke sind jeweils mit einem in Draufsicht von der zugehörigen Blockaußenfläche ausgehenden, in Draufsicht ringförmig umlaufenden Einschnitt versehen, an welchen eine innerhalb des Einschnitts liegende, ringförmige Erhebung angrenzt. Die zweiten mittigen Profilblöcke sind deutlich kleiner ausgeführt als die ersten mittigen Profilblöcke, wobei die zweiten mittigen Profilblöcke mit rillenartigen Einschnitten versehen sind, welche sich, im Querschnitt betrachtet, in Richtung zur Blockaußenfläche V-förmig verbreitern. Der Reifen soll eine gute Rutschfestigkeit aufweisen.

Bei Fahrradreifen der eingangs genannten Art ermöglichen die Kanten an den Stollen im off-road-Einsatz einen vorteilhaften formschlüssigen Kraftschluss und dadurch die erwünschten Griffeigenschaften. Je mehr Kanten vorhanden sind, umso besser sind die Griffeigenschaften. Übliche Stollenprofile weisen daher in Umfangs- und/oder Querrichtung orientierte Einschnitte oder Kerben in den Stollendeckflächen auf. In den Einschnitten oder Kerben verfangen sich Steine oder Steinchen, die oft nicht oder erst nach längerer Zeit ausgeworfen werden.

Auf matschigem Untergrund besteht die Möglichkeit des vollständigen Zusetzens der Einschnitte oder Kerben mit Material aus dem Untergrund. In der Deckfläche von mittleren Stollen sind meist in axialer Richtung oder im Wesentlichen in axialer Richtung orientierte Einschnitte oder Kerben ausgebildet, die sich beim Abrollen des Reifens am Untergrund - beim Hineinrollen in den Foootprint, insbesondere beim Bremsen - schließen. Die Kanten der Einschnitte stehen dann für den Griff nicht zur Verfügung. Im Bereich der Einschnitte der Stollen im Footprint stattfindende Relativbewegungen erhöhen zudem den Rollwiderstand des Reifens.

Der Erfindung liegt daher die Aufgabe zugrunde, ohne Einschnitte oder Kerben vorzusehen die Griffperformance der mittigen Stollen zu verbessern.

Gelöst wird die gestellte Aufgabe erfindungsgemäß dadurch, dass auf der Deckfläche von mittigen Stollen jeweils eine keilförmige Erhebung mit einer in Umfangsrichtung des Laufstreifens relativ zur Deckfläche des mittigen Stollens abfallenden Keilfläche ausgebildet ist, wobei die Keilflächen sämtlicher Erhebungen auf den mittigen Stollen in die gleiche Umfangsrichtung abfallen und wobei der Fahrradreifen derart am Fahrrad zu montieren ist, dass die Keilflächen in Richtung des Abrollens des Fahrradreifens bei Vorwärtsfahrt abfallen.

Gemäß der Erfindung ausgeführte Fahrradreifen weisen daher ein sogenanntes laufrichtungsgebundenes Stollenprofil auf. Um zusätzliche Kanten zur Verfügung zu stellen, werden mittige Stollen durch keilförmige Erhebungen, die in Abrollrichtung abgeschrägt sind, erhöht. Die an jeder Erhebung vorhandene Griffkante kann in ihrer Funktion durch Steine nicht beeinträchtigt werden.

Bei einer bevorzugten Ausführung fallen die Keilflächen, also die Deckflächen, der keilartigen Erhebungen, bis auf das Niveau der Deckflächen der mittigen Stollen ab. Eine derartige Ausgestaltung ist zusätzlich für einen geringen Abrieb der Erhebungen von Vorteil.

Bei einer weiteren bevorzugten Ausführung weisen die Keilflächen der Erhebungen in Draufsicht jeweils eine an die Deckfläche des jeweiligen mittigen Stollens angepasste Gestalt auf. Die äußeren Kanten der Keilflächen sind bei einer derartigen Ausführung an den Verlauf der äußeren Kanten der Deckflächen der mittigen Stollen angepasst, sodass sowohl an den Stollen als auch den Erhebungen Griffkanten zur Verfügung stehen.

Vorteilhafterweise weisen ferner die Erhebungen an der Deckfläche zum Rand der Deckfläche einen Abstand von 0,30 mm bis 1,20 mm auf. Ein derartiger Abstand sorgt für einen optimalen Erhalt der Griffkanten an den mittleren Stollen.

Weitere Maßnahmen, die für eine gute Funktion der Griffkanten an den Keilflächen sorgen, bestehen darin, dass die Keilflächen der Erhebungen an ihren in der Abrollrichtung bei Vorwärtsfahrt abgewandten Enden jeweils von einer gerade und in axialer Richtung verlaufenden Kante begrenzt sind, wobei bevorzugt ist, dass die Erhebungen an ihren der Abrollrichtung bei Vorwärtsfahrt abgewandten Enden eine Höhe von 0,50 mm bis 2,50 mm aufweisen.

Weitere Merkmale, Vorteile und Einzelheiten der Erfindung werden nun anhand der schematischen Zeichnung, die Ausführungsbeispiele darstellt, näher beschrieben. Dabei zeigen
Fig. 1 einen Umfangsabschnitt eines Fahrradreifens in Schrägansicht, jedoch ohne die zum Unterbau gehörenden Bauteile,
Fig. 2 eine Seitenansicht des Umfangsabschnittes aus Fig. 1,
Fig. 3 eine vergrößerte Ansicht eines Schulterstollens und
Fig. 4a und Fig. 4b vergrößerte Ansichten eines im Laufstreifen mittig positionierten Stollens.

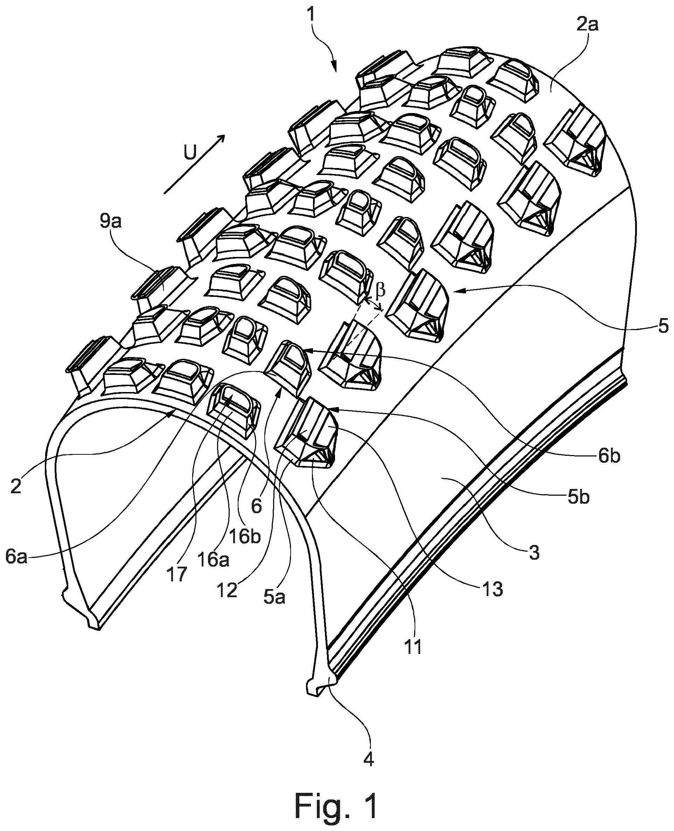

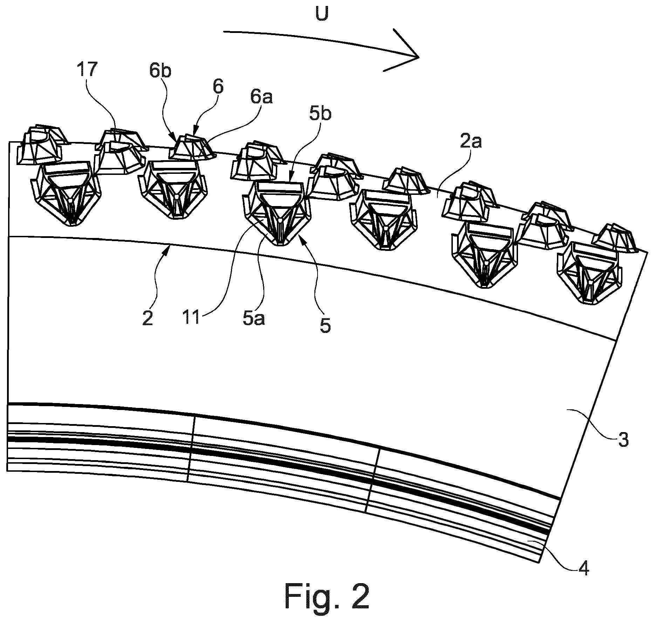

Fig. 1 und Fig. 2 zeigen von einem Fahrradreifen 1 einen profilierten Laufstreifen 2, Seitenwände 3 und Teilbereiche von Wulstbereichen 4. Nicht dargestellt sind beispielsweise die üblicherweise vorgesehene, mit einer Festigkeitsträgerlage versehene Karkasse und Wulstkerne in den Wulstbereichen 4, welche von der Karkasse umschlungen sind.

Der Fahrradreifen 1 ist insbesondere für die Fahrradkategorien GRAVEL und MTB geeignet und vorgesehen und weist daher eine Querschnittsbreite auf, die für Reifen der Fahrradkategorie GRAVEL 35 mm bis 55 mm und für Reifen der Fahrradkategorie MTB 50 mm bis 70 mm beträgt. Die Querschnittsbreite wird als Distanz zwischen den axial äußersten Punkten der Seitenwände 3 des Reifens in axialer Richtung gemessen, bei auf einer Felge montiertem, unter Standardinnendruck befindlichen Reifen gemäß E.T.R.T.O. in der zum Anmeldezeitpunkt dieser Patentanmeldung geltenden Fassung.

Wie insbesondere Fig. 1 zeigt, weist der Laufstreifen 2 des Fahrradreifens 1 ein Stollenprofil mit je einer schulterseitig verlaufenden Reihe aus Schulterstollen 5 und mit mittigen Stollen 6 im Laufstreifenbereich zwischen den Schulterstollen 5 auf. Die Laufstreifenbereiche zwischen den Stollen 5, 6 sind unstrukturiert und bilden eine Laufstreifenbasisfläche 2a. Die Figuren zeigen die Stollen 5, 6 in schematischen Strichdarstellungen mit scharfkantigen Konturen, wobei am vulkanisierten Reifen das Gummimaterial dafür sorgt, dass die Konturen und Übergänge zumeist und üblicherweise kaum merkbar gerundet sind.

Die jeweils eine kleinere Fläche im Laufstreifen 2 einnehmenden und ein kleineres Gummivolumen als die Schulterstollen 5 aufweisenden mittigen Stollen 6 bilden zwischen den Schulterstollen 5 in axialer Richtung orientierte Reihen, die in Umfangsrichtung abwechselnd und aufeinanderfolgend aus vier mittigen Stollen 6, zwei mittigen Stollen 6 und drei mittigen Stollen 6 bestehen, wobei auf eine Reihe aus drei mittigen Stollen 6 wieder eine Reihe aus vier mittigen Stollen 6 folgt. Jeder Stollen 5, 6 weist bevorzugt einen Stollensockel 5a, 6a, welcher an der Laufstreifenbasisfläche 2a eine den jeweiligen Stollen 5, 6 umlaufende niedrige Verbreiterung ist, und einen Stollenkörper 5b, 6b auf.

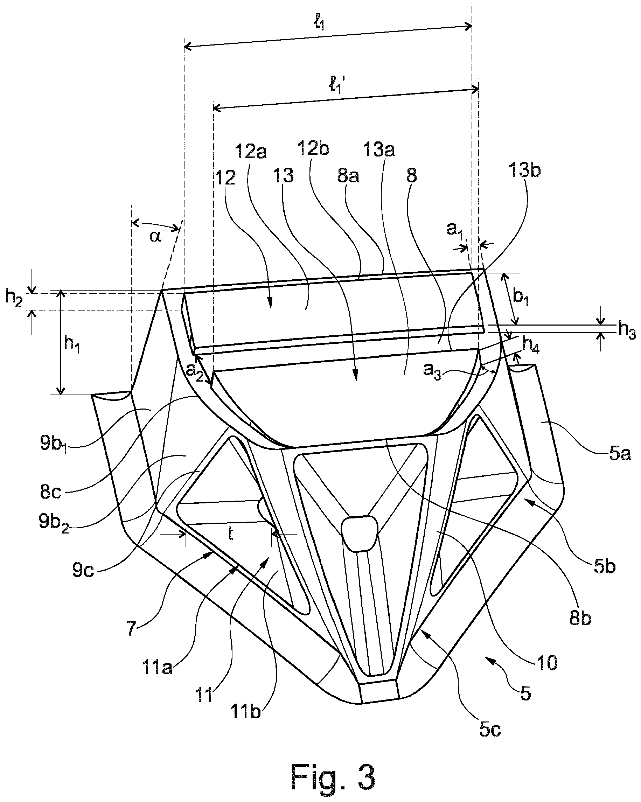

Anhand der Fig. 1 bis Fig. 3, insbesondere der Fig. 3, wird nun die Ausgestaltung eines Schulterstollens 5 näher beschrieben. Der Stollenkörper 5b des Schulterstollens 5 weist parallel zur Laufstreifenbasisfläche 2a (Fig. 1, Fig. 2) eine Basisfläche 7 (Fig. 3) auf, die sich aus einem laufstreifeninnenseitig befindlichen in Umfangsrichtung länglichen rechteckigen oder rechteckähnlich gestalteten Flächenteil mit längeren Seiten und einem an diesen anschließenden laufstreifenaußenseitig befindlichen gleichseitig - dreieckigen oder dreieckähnlichen Flächenteil zusammensetzt. Gemäß Fig. 3 weist der Stollenkörper 5b ferner eine trapezähnlich (gleichschenkeliges Trapez) gestaltete, parallel zur Basisfläche 7 verlaufende Deckfläche 8 auf, die von zwei parallel zueinander und zu den längeren Seiten des rechteckigen Flächenteils der Basisfläche 7 verlaufenden Stollenkanten, einer längeren Stollenkante 8a und einer kürzeren Stollenkante 8b, und von zwei die Enden der beiden Stollenkanten 8a, 8b verbindenden geringfügig nach außen gebogen oder alternativ nach außen gewinkelt verlaufenden Seitenkanten 8c begrenzt ist. Eine ebene Flanke 9a (Fig. 1) verbindet die laufstreifeninnenseitige längere Stollenkante 8a der Deckfläche 8 mit der außenseitig vorliegenden längeren Seite des rechteckigen Flächenteils der Basisfläche 7. Je zwei Flanken 9b₁ und 9b₂ verbinden die kürzeren Seiten des rechteckigen Flächenteils der Basisfläche 7 mit den nach außen gerundeten oder gewinkelt verlaufenden Seitenkanten 8c der Deckfläche 8. Die Flanken 9a, 9b₁ und 9b₂ sind bevorzugt ebene Flächen, die zur Laufstreifenbasisfläche 2a abfallend zu einer Senkrechten auf die Laufstreifenbasisfläche 2a unter einem Winkel α (Fig. 3) von 5° bis zu 30° verlaufen.

Die Schulterstollen 5 weisen eine gegenüber der Laufstreifenbasisfläche 2a in vertikaler Richtung und bis zur Deckfläche 8 ermittelte Höhe h₁ auf, die in der für solche Laufstreifen 2 üblichen Höhe in der Größenordnung von 2,00 mm bis 11,00 mm beträgt. Das Intervall von 2,00 mm bis 11,00 mm lässt sich nach Reifentypen unterteilen: 2,00 mm bis 4,00 mm für Gravel Reifen mit einer nominalen Querschnittsbreite von 30,00 mm bis 45,00 mm, insbesondere von 4,00 mm bis 7,00 mm für Gravel, Cross Country und Trail Reifen sowie 7,00 mm bis 11,00 mm für Enduro und Downhill Reifen wobei 9,00 mm bis 11,00 mm insbesondere eine Anwendung bei speziellen Matschreifen abdeckt. Die Höhe h₁ der Schulterstollen 5 ist bevorzugt konstant, alternativ nimmt die Höhe h₁ der Schulterstollen 5 ausgehend von ihren zur Laufstreifenmitte weisenden Stollenkanten 8a der Deckfläche 8 eine sich in Richtung zu den Stollenkanten 8b leicht verringernde Höhe auf.

Die Schulterstollen 5 sind derart auf der Laufstreifenbasisfläche 2a (Fig. 1, Fig. 2) positioniert, dass sie zur exakten Umfangsrichtung, die in Fig. 1 und Fig. 2 durch einen Pfeil U gekennzeichnet ist, geringfügig schräg gestellt sind, sodass die Stollenkanten 8a, 8b (Fig. 3) der Deckflächen 8 und die Flanken 9a (Fig. 1), in Draufsicht betrachtet, unter einem spitzen Winkel β (Fig. 1) von 5° bis 30°, in Richtung zur Laufstreifenmitte geneigt, verlaufen. Sind, wie beim gezeigten Ausführungsbeispiel an beiden Schultern des Laufstreifens 2 sämtliche Schulterstollen 5 übereinstimmend schräg gestellt, so handelt es sich bei dem Laufstreifen 2 um einen laufrichtungsgebundenen Laufstreifen, wobei der Fahrradreifen derart am Rad zu montieren ist, dass bei Vorwärtsfahrt, wie durch den Pfeil U angedeutet ist, die Stollenkanten 8a mit ihren weiter laufstreifeninnenseitig befindlichen Enden zuerst in den Untergrund eintreten.

Gemäß Fig. 3 weist der Schulterstollen 5 infolge des dreieckigen oder dreieckähnlichen Flächenteils der Basisfläche 7 einen der Laufstreifenaußenseite zugewandten Stollenbereich 5c auf, welcher von insbesondere drei und insgesamt V-förmig verlaufenden, dreieckigen bzw. dreieckähnlichen Flanken 9c, im Beispiel einer mittigen Flanke 9c und zwei seitlichen Flanken 9c, begrenzt ist. Beim gezeigten Ausführungsbeispiel ist jede Flanke 9c mit einer Aushöhlung 11 versehen, die jeweils eine Öffnung 11a aufweist, die einen Großteil der Flankenfläche einnimmt, sodass zwischen den Öffnungen 11a der drei Aushöhlungen 11 nur schmale Stege 10 als Teile der Flanken 9c vorhanden sind. Bei der dargestellten Ausführung sind die Öffnungen 11a analog zu den Flanken 9c dreieckig oder dreieckähnlich gestaltet. Die Aushöhlungen 11 sind im Inneren des Schulterstollens 5 von Flächen 11b begrenzt, welche annähernd den Seitenflächen einer dreiseitigen Pyramide oder eines dreiseitigen Pyramidenstumpfs entsprechen. Die mittige Flanke 9c ist derart gestaltet, dass sich die eine ihrer Dreieckspitzen bei der Basisfläche 7 befindet und eine Dreieckseite bei der Deckfläche 8 befindet, die seitlichen Flanken 9c weisen jeweils eine Dreieckseite bei der Basisfläche 7 und eine Dreieckspitze bei der Deckfläche 8 auf. Die Stege 10 verlaufen unter einem Winkel im Wertebereich des Winkels α zu einer Senkrechten auf die Laufstreifenbasisfläche 2a und in Richtung zur Laufstreifenbasisfläche 2a abfallend.

Die Aushöhlungen 11 weisen eine Tiefe t auf, die vom theoretischen Niveau der Flanken 9c bzw. der "Ebene" der Öffnungen 11a in senkrechter Richtung ausgehend bis zur tiefsten Stelle ermittelt wird, quasi den Höhen der erwähnten dreiseitigen Pyramiden bzw. Pyramidenstümpfe entspricht und die 1,00 mm bis 5,00 mm beträgt. Die Höhe der Pyramidenstümpfe hängt von der Stollenhöhe ab. An Stollen 5 mit einer Höhe h₁ von 2,00 mm und 4,00 mm weisen die Aushöhlungen 11 eine Tiefe t von 1,00 mm bis 2,00 mm, an Stollen 5 mit einer Höhe h₁ von 4,00 mm bis 7,00 mm eine Tiefe t von 2,00 mm bis 4,00 mm, an Stollen 5 mit eine Höhe h₁ von 7,00 mm bis 11,00 mm eine Tiefe t von bis zu 5,00 mm auf.

Die Schulterstollen 5, die üblicherweise das größte Gummivolumen von allen Stollen im Laufstreifen besitzen, sind für eine gute Abstützung bei Kurvenfahrt oder entlang von Traversen auf unbefestigtem, unebenem Untergrund besonders wichtig. Durch die Aushöhlungen 11 wird relativ viel Gummimaterial an den der Seitenwand 3 zugewandten Stollenbereichen 5c der Schulterstollen 5 eingespart, ohne dass die Funktion der Schulterstollen 5 strukturell beeinträchtigt wird. Nachdem auch die Kontaktflächen der Schulterstollen 5 zum Untergrund durch diese Ausgestaltung nicht vermindert sind, werden weder die Griffeigenschaften noch die Laufleistung beeinträchtigt.

Bei alternativen Ausführungen ist der Stollenbereich 5c von insgesamt U-förmig oder trapezförmig verlaufenden Flanken begrenzt oder mitbegrenzt und es kann nur eine einzige Aushöhlung vorhanden sein. Möglich sind auch Ausführungen mit zwei oder mehr als drei Aushöhlungen. Die Ausgestaltung der Aushöhlungen kann von der dargestellten und beschriebenen abweichen, beispielsweise können runde Aushöhlungen mit runden Öffnungen vorgesehen sein.

Um bei neuen Fahrradreifen und über eine gewisse Laufleistung die Griffleistung bzw. die Griffeigenschaften der Schulterstollen 5 auf unbefestigtem, unebenem, losem oder schottrigem Untergrund zu verbessern, sind, wie insbesondere Fig. 3 zeigt, auf der Deckfläche 8 der Schulterstollen 5 jeweils zwei keilförmige, in Richtung zu den Stollenkanten 8b, daher in Richtung Seitenwand 3 bzw. Laufstreifenaußenseite, abfallende Erhebungen 12, 13 aus dem Gummimaterial der Schulterstollen 5 ausgebildet. Die Erhebungen 12, 13 sind in Draufsicht langgestreckt ausgebildete, parallel zueinander verlaufende Elemente, die sich auch parallel zu den Stollenkanten 8a, 8b der Deckfläche 8 erstrecken. Die Erhebungen 12, 13 weisen daher jeweils eine abfallende Keilfläche 12a, 13a als Deckfläche und vier (Erhebung 12) sowie drei (Erhebung 13) Seitenflächen auf, die insbesondere senkrecht zur Deckfläche 8 verlaufen. Die Erhebungen 12, 13 sind an der Keilfläche 12a, 13a von parallel zueinander und gerade verlaufenden Längsseiten 12b, 13b begrenzt, die unter dem Winkel β (Fig. 1) von 5° bis 30° und insbesondere parallel zu den Stollenkanten 8a, 8b verlaufen.

Die nachfolgend angegebenen Dimensionen der Erhebungen 12, 13 variieren innerhalb der jeweiligen Wertebereiche in Abhängigkeit von der Reifendimension und der jeweiligen Stollengröße.

Die Erhebung 12 ist in Draufsicht langgestreckt rechteckig gestaltet und weist auf der Deckfläche 8 zu den Stollenkanten 8a und 8c jeweils einen Abstand a₁ (nur zur Stollenkante 8c eingezeichnet) von 0,30 mm bis 1,20 mm, auf. Ihre parallel zu den Stollenkanten 8c ermittelte, konstante Breite b₁ beträgt in der Größenordnung von 2,00 mm bis 7,00 mm. Die keilförmige Erhebung 12 weist bei der Stollenkante 8a ihre größte Höhe h₂ auf, welche 0,50 mm bis 2,50 mm, insbesondere bis 1,50 mm, beträgt, in Folge der Keilform verringert sich ihre Höhe in Richtung zur zweiten keilförmigen Erhebung 13 bis auf eine Höhe h₃ von 0,20 mm bis 1,50 mm.

Die Erhebung 13 befindet sich in einem insbesondere konstanten Abstand a₂ von 1,50 mm bis 4,00 mm von der Erhebung 12 und weist zwei seitliche Seitenflächen auf, die vorzugsweise der gebogenen Form der Seitenkanten 8c im Wesentlichen folgen. In Draufsicht betrachtet ist die Erhebung 13 bei der gezeigten Ausführung an den Verlauf der Seitenkanten 8c angepasst und verläuft zu diesen unter einem Abstand a₃ von 0,30 mm bis 1,00 mm. An ihrer breitesten Stelle weist die Erhebung 13 eine Breite im Wertebereich der erwähnten Breite b₁ von 2,00 mm bis 7,00 mm auf. Beide Erhebungen 12, 13 weisen jeweils eine größte Erstreckungslänge I₁, I₁' von 4,00 mm bis 12,00 mm auf, wobei sich bei der gezeigten Ausführung die Erstreckungslängen I₁, I₁' der Erhebungen 12, 13 voneinander unterscheiden.

Die Erhebung 13 weist an ihrer der Erhebung 12 zugewandten Seite eine Höhe h₄ von 0,20 mm bis 1,50 mm, insbesondere von bis zu 0,70 mm, auf, ihre Keilfläche 13a fällt in Richtung zur laufstreifenaußenseitigen Kante der Deckfläche 8 bis auf das Niveau der Deckfläche 8 ab und endet bevorzugt an dieser Kante, welche mit der Stollenkante 8b zusammenfällt. Die Erhebungen 12, 13 stellen somit zusätzliche Griffkanten und Griffflächen zur Verfügung.

Bei einer alternativen Ausführung ist auf Schulterstollen 5 nur eine keilförmige und in Richtung zur Laufstreifenaußenseite abfallende Erhebung vorgesehen. Bei einer weiteren alternativen Ausführung sind auf Schulterstollen 5 mehr als zwei, insbesondere drei, in Richtung zur Laufstreifenaußenseite abfallende Erhebungen ausgebildet.

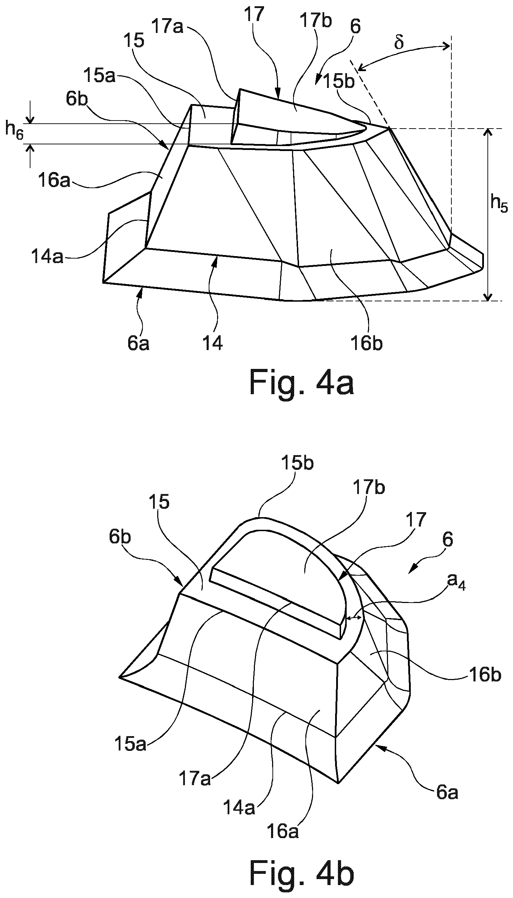

Die Ausgestaltung einer Ausführung eines mittigen Stollens 6 wird anhand der Fig. 1 und der Fig. 4a und 4b näher beschrieben. Dabei variieren die angegebenen Dimensionen innerhalb der jeweiligen Wertebereiche in Abhängigkeit von der Reifendimension und der jeweiligen Stollengröße. Die Stollenkörper 6b der mittigen Stollen 6 weisen jeweils parallel zur Laufstreifenbasisfläche 2a (Fig. 1, Fig. 2) eine Basisfläche 14 (Fig. 4a) und eine parallel zu dieser orientierte Deckfläche 15 auf, wobei die Basisfläche 14 und die Deckfläche 15 parallel zueinander verlaufende gerade Kanten 14a, 15a besitzen, die eine Länge von 4,00 mm bis 9,00 mm aufweisen und in axialer Richtung orientiert sind (vergl. Fig. 1). Die Basisfläche 14 ist von der erwähnten geraden Kante 14a und weiteren mit dieser Kante 14a ein Polygon mit zumindest vier Ecken bildenden weiteren Kanten umlaufen. Die Deckfläche 15 ist von der Kante 15a und einer die Enden dieser Kante 15a verbindenden insgesamt gerundet bzw. bogenförmig verlaufenden Kante 15b umlaufen. Zwischen der Basisfläche 14 und der Deckfläche 15 verlaufen Flanken 16a, 16b, die relativ zu einer Senkrechten auf die Laufstreifenbasisfläche 2a (Fig. 1) geneigt sind, insbesondere unter einem spitzen Winkel δ (Fig. 4a) von bis zu 40° und derart, dass sich der Stollenkörper 6b in Richtung zur Deckfläche 15 verjüngt. Es sind mittige Stollen 6 vorhanden, bei welchen die bogenförmig verlaufenden Kanten 15b in Draufsicht bezüglich der Kanten 15a symmetrisch gestaltet sind, oder wie beim mittigen Stollen 6 gemäß Fig. 4a und 4b gezeigt asymmetrisch gerundet verlaufen. Bei einer alternativen Ausführung bildet auch die Deckfläche 15 jeweils ein Polygon mit zumindest vier Ecken.

Die mittigen Stollen 6 weisen eine in senkrechter Richtung zur Laufstreifenbasisfläche 2a ermittelte, insbesondere konstante Höhe h₅ (Fig. 4a) von 2,00 mm bis 8,00 mm, insbesondere von 4,00 mm bis 7,00 mm, auf.

Auf jedem mittigen Stollen 6 ist jeweils eine keilförmig gestaltete, flache Erhebung 17 mit einer Keilfläche 17b als Deckfläche ausgebildet, wie im Folgenden anhand der Fig. 4a und 4b näher erläutert wird. Die in Draufsicht bevorzugt eine der äußeren Kontur der Deckfläche 15 angepasste Gestalt aufweisende Erhebung 17 weist senkrecht zur Deckfläche 15 verlaufende Seitenflächen und am Niveau der Deckfläche 15 zu den Kanten 15a, 15b der Deckfläche 15 einen Abstand a₄ (Fig. 4b) von 0,30 mm bis 1,20 mm auf. Die Keilflächen 17b der Erhebungen 17 fallen an sämtlichen mittigen Stollen 6 in die gleiche Umfangsrichtung ab, wobei der Fahrradreifen derart am Fahrrad zu montieren ist, dass die Keilflächen 17b der Erhebungen 17 in Richtung des Abrollens des Fahrradreifens 1 bei Vorwärtsfahrt (Pfeil U in Fig. 1) abfallen. Die Keilflächen 17b der Erhebungen 17 weisen ferner jeweils eine parallel zur Kante 14a verlaufende Kante 17a auf, an welcher die Erhebung 17, senkrecht zur Deckfläche 15 ermittelt, ihre größte Höhe h₆ (Fig. 4a) von 0,50 mm bis 2,50 mm aufweist. Die Keilfläche 17b fällt entweder bis auf das Niveau der Deckfläche 15 ab oder weist gemäß einer alternativen Ausführung an ihrem der Kante 17a abgewandten Ende noch eine gewisse Höhe in der Größenordnung von bis zu 0,20 mm auf.

### Bezugszeichenliste

- 1: Fahrradreifen
- 2: Laufstreifen
- 2a: Laufstreifenbasisfläche
- 3: Seitenwand
- 4: Wulstbereich
- 5: Schulterstollen
- 5a: Stollensockel
- 5b: Stollenkörper
- 5c: Stollenbereich
- 6: mittiger Stollen
- 6a: Stollensockel
- 6b: Stollenkörper
- 7: Basisfläche
- 8: Deckfläche
- 8a, 8b: Stollenkante
- 8c: Seitenkante
- 9a, 9b₁, 9b₂: Flanke
- 9c: Flanke
- 10: Steg
- 11: Aushöhlung
- 11a: Öffnung
- 11b: Fläche
- 12, 13: keilförmige Erhebung
- 12a, 13a: Keilfläche
- 12b, 13b: Längsseite
- 14: Basisfläche
- 14a: Kante
- 15: Deckfläche
- 15a, 15b: Kante
- 16a, 16b: Flanke
- 17: keilförmige Erhebung
- 17a: Kante
- 17b: Keilfläche
- h₁: Höhe des Schulterstollens 5
- h₂, h₃: Höhen der Erhebung 12
- h₄: Höhe der Erhebung 13
- h₅: Höhe der Stollen 6
- h₆: Höhe der Erhebung 17
- t: Tiefe der Aushöhlung 11
- b₁: Breite der Erhebung 12
- a₁, a_{2,} a_{3,} a₄: Abstand
- α: Winkel der Flanken 9a, 9b₁, 9b_{2,} 9c
- β: Winkel der Schulterstollen 5 zur Umfangsrichtung
- β: Winkel der Längskanten der Keilflächen 12b, 13b
- δ: Winkel der Flanken 16a, 16b
- I₁, I₁': Erstreckungslängen der Erhebungen 12, 13
- U: Umfangsrichtung (Abrollrichtung)

## Patentansprüche

1. Fahrradreifen (1) mit einem Laufstreifen (2) mit einem laufrichtungsgebundenem Stollenprofil aus voneinander beabstandeten Stollen (5, 6), wobei die Laufstreifenbereiche zwischen den Stollen (5, 6) unstrukturiert sind und eine Laufstreifenbasisfläche (2a) bilden, wobei zu den Stollen (5, 6) Schulterstollen (5) und mittige Stollen (6) gehören, wobei die mittigen Stollen (6) jeweils eine parallel oder im Wesentlichen parallel zur Laufstreifenbasisfläche (2a) verlaufende Deckfläche (15) aufweisen,
**dadurch gekennzeichnet,**
**dass** auf der Deckfläche (15) von mittigen Stollen (6) jeweils eine keilförmige Erhebung (17) mit einer in Umfangsrichtung des Laufstreifens (2) relativ zur Deckfläche (15) des mittigen Stollens (6) abfallenden Keilfläche (17b) ausgebildet ist, wobei die Keilflächen (17b) sämtlicher Erhebungen (17) auf den mittigen Stollen (6) in die gleiche Umfangsrichtung abfallen und wobei der Fahrradreifen (1) derart am Fahrrad zu montieren ist, dass die Keilflächen (17b) in Richtung des Abrollens des Fahrradreifens (1) bei Vorwärtsfahrt abfallen.

2. Fahrradreifen (1) nach Anspruch 1, **dadurch gekennzeichnet, dass** die Keilflächen (17b) der Erhebungen (17) bis auf das Niveau der Deckflächen (15) der mittigen Stollen (6) abfallen.

3. Fahrradreifen (1) nach Anspruch 1 oder 2, **dadurch gekennzeichnet, dass** die Keilflächen (17b) der Erhebungen (17) in Draufsicht jeweils eine derart an die äußere Kontur der Deckfläche (15) des mittigen Stollens (6) angepasste Gestalt aufweisen, dass die Keilfläche (17b) die Gestalt der Deckfläche (15) des mittigen Stollens (6) in verkleinerter Form wiedergibt.

4. Fahrradreifen (1) nach einem der Ansprüche 1 bis 3, **dadurch gekennzeichnet, dass** die Erhebungen (17) an der Deckfläche (15) zum Rand der Deckfläche (15) einen Abstand (a₄) von 0,30 mm bis 1,20 mm aufweisen.

5. Fahrradreifen (1) nach einem der Ansprüche 1 bis 4, **dadurch gekennzeichnet, dass** die Keilflächen (17b) der Erhebungen (17) an ihren der Abrollrichtung bei Vorwärtsfahrt abgewandten Enden jeweils von einer gerade und in axialer Richtung verlaufenden Kante (17a) begrenzt sind.

6. Fahrradreifen (1) nach einem der Ansprüche 1 bis 5, **dadurch gekennzeichnet, dass** die Erhebungen (17) an ihren der Abrollrichtung bei Vorwärtsfahrt abgewandten Enden eine Höhe (h₆) von 0,50 mm bis 2,50 mm aufweisen.

## Claims

1. Bicycle tyre (1) having a tread (2) with a directional cleat tread composed of mutually spaced apart cleats (5, 6), wherein the tread regions between the cleats (5, 6) are unstructured and form a tread base surface (2a), wherein the cleats (5, 6) include shoulder cleats (5) and central cleats (6), wherein the central cleats (6) each have a top surface (15) running parallel or substantially parallel to the tread base surface (2a),
**characterized in that**
a wedge-shaped elevation (17) with a wedge surface (17b) that descends in the circumferential direction of the tread (2) relative to the top surface (15) of the central cleat (6) is formed in each case on the top surface (15) of central cleats (6), wherein the wedge surfaces (17b) of all elevations (17) on the central cleats (6) descend in the same circumferential direction, and wherein the bicycle tyre (1) is to be assembled on the bicycle in such a manner that the wedge surfaces (17b) descend in the direction of the rolling of the bicycle tyre (1) during forward travel.

2. Bicycle tyre (1) according to Claim 1, **characterized in that** the wedge surfaces (17b) of the elevations (17) descend to the level of the top surfaces (15) of the central cleats (6).

3. Bicycle tyre (1) according to Claim 1 or 2, **characterized in that** the wedge surfaces (17b) of the elevations (17) in plan view each have a shape adapted to the outer contour of the top surface (15) of the central cleat (6) in such a manner that the wedge surface (17b) reproduces the shape of the top surface (15) of the central cleat (6) in a reduced form.

4. Bicycle tyre (1) according to one of Claims 1 to 3, **characterized in that** the elevations (17) on the top surface (15) have a spacing (a₄) of 0.30 mm to 1.20 mm from the periphery of the top surface (15).

5. Bicycle tyre (1) according to one of Claims 1 to 4, **characterized in that** the wedge surfaces (17b) of the elevations (17) are delimited at their ends facing away from the rolling direction during forward travel in each case by a straight edge (17a) extending in the axial direction.

6. Bicycle tyre (1) according to one of Claims 1 to 5, **characterized in that** the elevations (17) have a height (h₆) of 0.50 mm to 2.50 mm at their ends facing away from the rolling direction during forward travel.

## Revendications

1. Pneumatique de bicyclette (1) comprenant une bande de roulement (2) présentant un profil à crampons directionnel constitué de crampons (5, 6) espacés les uns des autres, les zones de la bande de roulement situées entre les crampons (5, 6) étant non structurées et formant une surface de base de bande de roulement (2a), les crampons (5, 6) comprenant des crampons d'épaulement (5) et des crampons centraux (6), les crampons centraux (6) présentant chacun une surface supérieure (15) s'étendant parallèlement ou sensiblement parallèlement à la surface de base de bande de roulement (2a),
**caractérisé en ce**
**qu'**une saillie en forme de coin (17) est formée sur la surface supérieure (15) de chacun des crampons centraux (6), avec une surface inclinée (17b) qui descend, dans la direction circonférentielle de la bande de roulement (2), par rapport à la surface supérieure (15) du crampon central (6), les surfaces inclinées (17b) de toutes les saillies (17) sur les crampons centraux (6) descendant dans la même direction circonférentielle, et le pneumatique de bicyclette (1) étant destiné à être monté sur la bicyclette de telle sorte que les surfaces inclinées (17b) descendent dans la direction de roulement du pneumatique de bicyclette (1) lors d'un déplacement vers l'avant.

2. Pneumatique de bicyclette (1) selon la revendication 1, **caractérisé en ce que** les surfaces inclinées (17b) des saillies (17) descendent jusqu'au niveau des surfaces supérieures (15) des crampons centraux (6).

3. Pneumatique de bicyclette (1) selon la revendication 1 ou 2, **caractérisé en ce que** les surfaces inclinées (17b) des saillies (17) présentent chacune, en vue de dessus, une forme adaptée au contour extérieur de la surface supérieure (15) du crampon central (6) de telle sorte que la surface inclinée (17b) reproduit, sous une forme réduite, la forme de la surface supérieure (15) du crampon central (6).

4. Pneumatique de bicyclette (1) selon l'une quelconque des revendications 1 à 3, **caractérisé en ce que** les saillies (17) présentent, sur la surface supérieure (15), une distance (a4) de 0,30 mm à 1,20 mm par rapport au bord de la surface supérieure (15).

5. Pneumatique de bicyclette (1) selon l'une quelconque des revendications 1 à 4, **caractérisé en ce que** les surfaces inclinées (17b) des saillies (17) sont chacune délimitées, à leur extrémité opposée à la direction de roulement lors d'un déplacement vers l'avant, par une arête (17a) rectiligne et s'étendant dans la direction axiale.

6. Pneumatique de bicyclette (1) selon l'une quelconque des revendications 1 à 5, **caractérisé en ce que** les saillies (17) présentent, à leurs extrémités opposées à la direction de roulement lors d'un déplacement vers l'avant, une hauteur (h₆) de 0,50 mm à 2,50 mm.
